# EUROPEAN PATENT SPECIFICATION

(11) **EP 3 286 514 B1**
(45) Date of publication and mention of the grant of the patent: **11.12.2019**
(21) Application number: 16726423.3
(22) Date of filing: 21.04.2016
(51) Int. Cl.: F28F 9/18, F28F 9/22, F28F 9/00, F28D 7/16, F28D 21/00

(54) **HEAT EXCHANGER**
WÄRMETAUSCHER
ÉCHANGEUR DE CHALEUR

(30) Priority: 24.04.2015 IT UB20150270
(43) Date of publication of application: 28.02.2018
(73) Proprietor: Hexsol Italy S.r.l., 24121 Bergamo (BG) (IT)
(72) Inventor: FOGLIENI, Fabiano, I-24033 Calusco d'Adda (BG) (IT); ZANARDI, Luca, I-24125 Bergamo (IT)
(74) Representative: Lampis, Marco
(86) International application number: PCT/IB2016/052257
(87) International publication number: WO 2016/170486

(56) References cited:
- EP-A2- 1 331 465
- CN-A- 103 528 405
- CN-U- 202 675 999
- US-A- 4 943 001

## Description

The present invention refers to a heat exchanger of the type with a pressurised shell and a tube bundle between the inlet and outlet tubesheets. In particular, the exchanger can be of the kind with at least one tubesheet, of the 'thin' kind, i.e. with the tubesheet designed to be relatively flexible and to withstand the internal pressure of the exchanger. In still greater detail, the exchanger can be a TLE (Transfer Line Exchanger) used in the ethylene production cycle.

In many types of tube bundle exchangers there are risks of erosion on the hot flue gases side and of corrosion and overheating on the exchanging fluid side (in particular, with water) on the 'hot' tubesheet. Moreover, there can also be risks of steam stagnation, overheating, fatigue cycles, and salt deposition on the 'cold' tubesheet. In particular, but not exclusively, such risks are encountered particularly in TLE exchangers for ethylene, which typically feature an ascending vertical motion of the flue gases within the tubes and which have the lower tubesheet as the hot tubesheet.

For the joint between the ends of the tubes and the tubesheet, one system used consists of fillet-welding and strength-welding the tubes, i.e. arranging the tubes with the free end thereof running through the tubesheet in order to be welded onto the external face of the said tubesheet. Welding on the external face of the tubesheet is convenient and economical to carry out, however, such welding produces a long welding bead facing the outside of the tubesheet, which can be easily eroded by the flow of fluid at the exchanger inlet. In particular, especially in the TLEs for ethylene, there is a considerable erosion problem caused by the incoming gas at the inlet tubesheet ("hot" tubesheet) as a result of the particulate (coke) being dragged by the high speed gases (>100 m/s).

To try to improve the situation, for some time now, it has been suggested that - solely for the inlet tubesheet - butt welding be used with IBW (Internal Bore Welding).

With such welding, the end of the tube no longer runs through the tubesheet to then be welded on the outer face of the latter, but is - instead - housed via the butt-end - in a collar on the internal face of the tubesheet (shell side) and the main welding between the tube and the collar is made from inside the same tube, by inserting a special welding head into the tube.

With such butt welding, the weld bead is no longer frontal to the flow of fluid to be cooled and does not experience direct impact with the fluid.

There is, however, exchanger asymmetry generated which, in the commonly known exchangers with IBW, brings various disadvantages, including, for example, the need to maintain a single flow direction for the exchanger's entire working life. Because the inlet end of the exchanger always wears more than the outlet end, the exchanger's working life - before intense maintenance - is therefore limited by the wear at the inlet.

EP1331465 discloses the connection of a tube bundle to an inlet plate in a heat exchanger. CN103528405 relates to a heat exchanger in which the inlet tube sheet and the heat exchange tubes are connected by a inner hole welding.

CN202675999 discloses a heat exchanger in which the heat exchange tubes and the tube plates are connected together through angle joint welding.

US4943001 discloses an heat exchanger in which each tube is passed through a bore in one of the tubesheets and the leading end of the tube is internal welded to the other tubesheet. The trailing end of the tube is machined to be expanded and it is internal welded to the tubesheet. The main aim of the present invention is to overcome the drawbacks of the commonly known technique by providing an exchanger with a tube bundle between opposing tubesheets with an enhanced structure.

A further purpose is to allow inversion of the flow within the exchanger after a certain period of activity, thereby increasing the working life thereof.

In view of such aims, the decision was made to produce, according to the invention, a heat exchanger with a pressurised shell and a tube bundle with exchanging tubes between opposing tubesheets, wherein both ends of the tubes in the tube bundle are fastened to the tubesheets by IBW, and as claimed in claim 1.

In particular, it has been found advantageous to produce the exchanger with a pressurised shell having, at one end thereof, in proximity to one of the tubesheets, a part of the shell which is detached, to provide access to the internal side of the tubesheet, so as to allow alignment operations and IBW to weld the tubes to the tubesheet after welding the opposite ends of the tubes to the other tubesheet.

According to the invention, the decision was also made to provide a method for the production and assembly of the tube bundle heat exchanger with pressurised shell and exchanging tubes between a first tubesheet and a second, opposing, tubesheet, comprising steps consisting of producing the exchanger shell (essentially a cylinder which is open at both ends and has at least one part missing in proximity to the end), welding the first ends of the tubes in the tube bundle to the first tubesheet of the two tubesheets via IBW, arranging the first tubesheet next to the corresponding end of the shell with the tube bundle inserted there so that the area with the part missing is aligned with the opposite end of the tubes in the bundle, welding the opposite ends of the tubes to the second tubesheet via IBW, and adding the missing part of the shell so as to complete the said shell.

The missing part of the section can be advantageously formed of sectors of the shell's cylindrical wall, one of which can also advantageously comprise an inlet or outlet pipe for the cooling fluid intended to flow through the shell.

Advantageously, the cylindrical wall sectors may form a side wall for a cooling fluid distribution area within the shell in correspondence with a flow baffle at the end within the complete shell.

To provide a clearer explanation of the innovative principles of the present invention and the advantages thereof with respect to the commonly known technique, an exemplifying embodiment in which the said principles are applied will be described below, with the help of the accompanying drawings. In the drawings:
- Figure 1 is a schematic, partially sectioned, side view of an exchanger according to the invention, in an assembled condition;
- Figure 2 shows, schematically, a cross-section of a connecting zone between a tube and the tubesheet in the exchanger according to Figure 1;
- Figures 3 and 4 show partial schematic views of the exchanger in Figure 1 during the subsequent phases of embodiment according to a method envisaged in the present invention. With reference to the figures, Figure 1 shows an exchanger as a whole denoted by 10, produced according to principles of the present invention.

The exchanger 10 comprises a pressurised shell 11, at the opposite ends of which there are conical diffusers (or cylindrical diffusers with lateral outlets) or manifolds 12, 13, to which pipes 14, 15 are fitted for the inlet and outlet of the fluid to be cooled (for example, ethylene steam). A tube bundle 18 is arranged in the shell between the tubesheets 16 and 17 in order to be immersed in the exchanging fluid (e.g. water) which circulates in the exchanger via inlet and outlet pipes 19 and 20. Advantageously, the tubesheets can be of the kind known as "thin" and can be, therefore, flexible tubesheets, which means that the capacity to withstand flexion due to the internal pressure of the exchanger is ensured, for example, by the said tube bundle welded between the tubesheets, and the tubesheets flex outwards also due to the thermal expansion of the bundle.

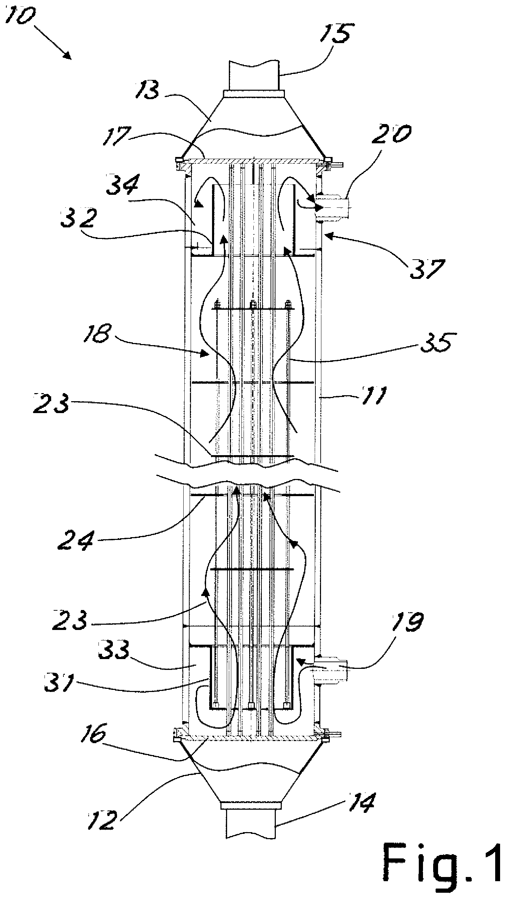

As can be seen, again in Figure 1, diaphragms can also be used in the exchanger according to the invention, arranged transversely along the bundle, to convey the exchanging fluid.

Advantageously, such diaphragms have the form of discs 23 and rings 24, which alternate along the axis of the bundle in order to ensure circulation as shown by the arrows in Figure 1, in other words, winding between a peripheral passageway and a central passageway. The exchanger (in particular a TLE) is, in fact, preferably vertical, with an ascending motion of the fluid (flue gases) to be cooled.

As seen in Figure 1, diaphragms 31 and 32 can also be advantageously envisaged, arranged at the two ends of the exchanger around the tube bundle and shaped with cylindrical walls along the axis of the exchanger so as to form zones 33, 34 in correspondence with the pipes 19 and 20, which are pipes for the distribution of the cooling fluid around the circumference of the shell and then direct the fluid so as to flow from one end of the exchanger to the other. Advantageously, such end diaphragms are fastened (possibly welded) to the walls of the shell. Furthermore, tie rods 35 are preferably envisaged which extend along the axis of the exchanger so as to support any other diaphragms distributed along the bundle. As shown in Figure 1, in the case of the vertical exchanger, the tie rods can also be supported solely at the bottom thereof in order to keep the bundle cage spaced apart from the diaphragms as desired. The cage (diaphragms, rods, spacers) may also, however, be integral with the shell. According to the principles of the present invention, the tubes in the bundle have both ends welded to the respective tubesheets by means of IBW (Internal Bore Welding) or butt welding.

The double welding of the IBW type on both the hot side and the cold side of the exchanger allows the exchanger (advantageously a TLE) to be reversible, i.e. the inlets and outlets of the primary and secondary fluid flows may be swapped over so that the exchanger inlet becomes the outlet and vice versa. In other words, the exchanger may, advantageously, be overturned by 180°.

This allows, for example, the working life of the exchanger to be lengthened before the need arises for intense maintenance following wear.

The solution is applicable to both homogeneous use of metals in the tubes and tubesheets (for example, molybdenum or low-alloy steels) and to a configuration in which the central part of the tubesheets is made of noble metals, for example Inconel 625, as well as any initial and final fitting segments welded between the tubesheet and tubes.

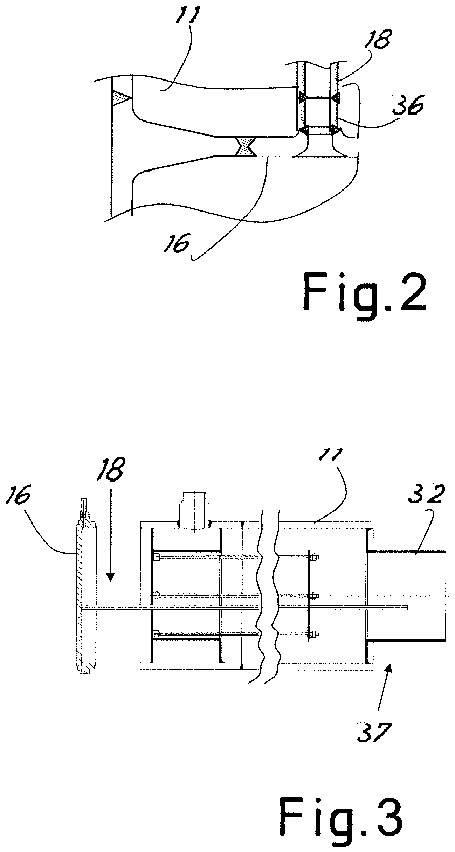

Figure 2 shows a possible example of IBW butt welding performable at both ends of the tubes, where the use of a fitting segment 36 is envisaged between each end of the tubes in the bundle 18 and the respective tubesheet (16 or 17).

This solution offers increased resistance to erosion, to corrosion, and to overheating at the bottom of the exchanging tubes (in a classic TLE featuring hot flue gases moving in an ascending vertical motion) and increased resistance to steam stagnation, overheating, and cyclic fatigue and to attack by salt deposits on the top of the tubes.

Since the tubesheets and the tubes according to the invention are reversible, the reversibility can be extended to every sub-component of the exchanger in order to have complete reversibility of the exchanger. For complete reversibility, the exchanger can be made completely symmetrical with respect to an ideal transversal centreline plane (the ideal plane cutting the tubes halfway along the length thereof). Of course, complete reversibility requires special techniques concerning the arrangement of the external supports (saddles, brackets, guides, etc.) and the arrangement of the internal elements, as are now easily imaginable by persons skilled in the art.

For the embodiment of the exchanger according to the invention, it has been found to be advantageous to produce the heat with a pressurised shell having, at one end thereof, in proximity to one of the tubesheets, a part of the shell which is detached, so that such part may be fitted after the alignment operations and the IBW to weld the tubes to the corresponding tubesheet, possibly after welding the opposite ends of the tubes to the other tubesheet. In this way, accessibility to the internal face of the tubesheet easily maintained.

In the embodiment in Figure 1, the part of the shell which is detached is denoted by 37 and advantageously corresponds to the part of the shell in proximity to area 34 (or 33) for the distribution of the cooling fluid and is directly in contact with the tubesheet.

Figure 3 shows a first assembly step in which, after producing the shell 11 (essentially as a cylinder which is open at both ends and with at least one part missing at the end, i.e. the terminal part 37) and after positioning and fastening any dividers with the tie rods thereof, the tubes 18 in the tube bundle are welded - at the first end thereof - to the first tubesheet via butt welding (IBW).

The tubesheet can be kept away from the shell throughout the entire welding phase, in order to have full access to and inspectability of the welds. The bundle can also be already partially inserted into the shell, as can be clearly seen in Figure 3.

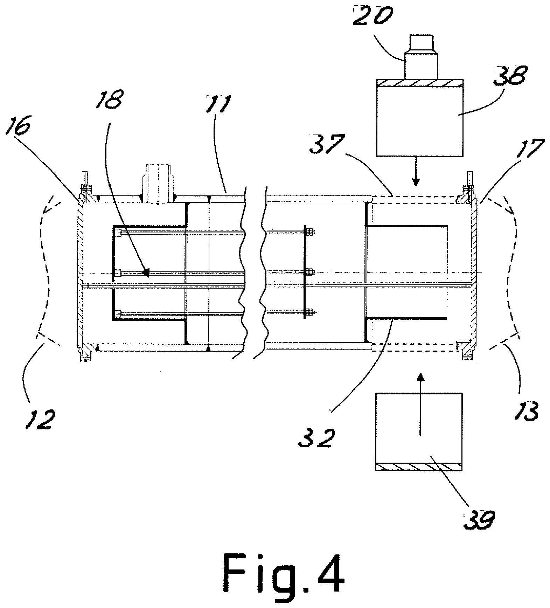

After welding the bundle to the first tubesheet, the said first tubesheet - with the tube bundle inserted into the shell (for example, by lowering the shell onto the first tubesheet) - can be positioned next to the corresponding end of the shell so that the missing section is aligned with the opposite end of the tubes in the bundle, as shown in Figure 4. The first tubesheet can be fastened in place on the end of the shell 11 relating thereto.

As also seen in Figure 4, the opposite ends of the tubes (for the sake of simplicity, only one is shown) can be butt-welded to the second tubesheet, also - advantageously - via IBW, since both faces of the second tubesheet are still accessible. After the welding, the missing part 37 from the end of the shell can be refitted, so as to complete the shell and close the chamber for the circulation of the cooling fluid.

The missing part 37 of the section can be advantageously formed of sectors of the shell's wall. For example, as shown in Figure 4, there can be two sectors, denoted by 38, 39, which can be positioned one next to the other in a radial fashion. The final fastening can be achieved by welding or other suitable secure constraining system.

Advantageously, one of the sectors can also comprise the inlet or outlet pipe 19 or 20 for the cooling fluid which has to circulate in the shell. Alternatively to a complete removal of the terminal part 37 of the exchanger shell, the removed parts can also create simply windows in the shell wall for access to the internal face of the tubesheet, with such windows closed following the welding of the tubes. This also means a precise reference can be provided for the positioning of the second tubesheet.

After the welding of the tubes and the closure of the shell, the other exchanger elements can be fitted, such as - for example - the end manifolds 12 and 13.

At this point, it is clear how the intended aims are achieved. A tube bundle exchanger produced according to the invention is prone to much fewer erosion and corrosion effects and also allows greater efficiency and flexibility of use, thanks also to the possibility of rendering such exchanger reversible and, in particular, overturnable.

Naturally, the description set out above of an embodiment applying the innovative principles of the present invention is given by way of example of such innovative principles and therefore must not be deemed a limitation of the patent right claimed here. For example, the proportions of the various parts of the exchanger may vary with respect to that shown in the drawings in order to adapt to specific requirements, as is easily imaginable by persons skilled in the art. The number of tubes, tie rods, and any disc or ring-shaped internal diaphragms may also vary depending on the embodiment and the specific requirements, as may the position of the sections of the exchanger shell used to access the internal part of the second tubesheet for the second IBW on the tubes. The access part 37 may be positioned on one side and/or on the opposite side of the exchanger, although it has been found to be advantageous to position such part on the cold tubesheet. Accessibility to the interior can also be made possible at both ends.

## Claims

1. A heat exchanger (10) with a pressurised shell (11) and a tube bundle with exchanging tubes (18) located between a first and a second tubesheet (16, 17), wherein both ends of the tubes (18) in the tube bundle are fastened to the tubesheets via IBW, **characterised by** the fact that the pressurised shell has, at an end in proximity to the second tubesheet, a detached part (37) of the shell to provide access to the internal side of said second tubesheet during assembly, after the opposite ends of the tubes have been fastened to the first tubesheet.

2. An exchanger according to Claim 1, **characterised by** the fact that the said detached part (37) of the shell is formed of sections of the shell wall.

3. An exchanger according to Claim 1, **characterised by** the fact that the said detached part (37) of the shell is positioned in correspondence with an area (33, 34) for the distribution of the cooling fluid inside the fully assembled shell.

4. A heat exchanger according to Claim 3, **characterised by** the fact that the said area (33, 34) is defined by a distributor diaphragm (31, 32) arranged around the tube bundle.

5. An exchanger according to Claim 1, **characterised by** the fact that such exchanger is a TLE for ethylene.

6. An exchanger according to Claim 1, **characterised by** the fact that the tubes are welded to the tubesheets with fitting segments (36) interposed therebetween.

7. An exchanger according to Claim 6, **characterised by** the fact that the fitting segments (36) and the tubesheets are made of Inconel 625.

8. A method for the production of a heat exchanger according to any of the previous claims, comprising the stages consisting of producing the exchanger shell (11), which is essentially a cylinder which is open at both ends and has at least one part (37) missing in proximity to the end, welding the first ends of the tubes (18) in the tube bundle to the first tubesheet of the two tubesheets via IBW, arranging the first tubesheet next to the corresponding end of the shell with the tube bundle inserted there so that the area with the part missing (37) is aligned with the opposite end of the tubes in the bundle, welding the opposite ends of the tubes to the second tubesheet via IBW, and adding the missing part of the shell so as to complete the said shell.

9. A method according to Claim 8 in which the exchanger is made to be reversible.

## Patentansprüche

1. Wärmetauscher (10) mit einer unter Druck stehenden Hülle (11) und einem Rohrbündel mit Austauschrohren (18), die zwischen einer ersten und einer zweiten Rohrplatte (16, 17) angeordnet sind, worin beide Enden der Rohre (18) in dem Rohrbündel mittels IBW an den Rohrplatten befestigt sind, **dadurch gekennzeichnet, dass** die unter Druck stehende Hülle an einem Ende in Nähe zu der zweiten Rohrplatte einen separaten Teil (37) der Hülle aufweist, um während der Montage zu der inneren Seite der zweiten Rohrplatte einen Zugang bereitzustellen, nachdem die abgewandten Enden der Rohre an der ersten Rohrplatte befestigt wurden.

2. Tauscher nach Anspruch 1, **dadurch gekennzeichnet, dass** der separate Teil (37) der Hülle aus Abschnitten der Hüllenwand ausgebildet ist.

3. Tauscher nach Anspruch 1, **dadurch gekennzeichnet, dass** der separate Teil (37) der Hülle zur Verteilung des Kühlfluids in der vollständig montierten Hülle in Verbindung mit einer Fläche (33, 34) angeordnet ist.

4. Wärmetauscher nach Anspruch 3, **dadurch gekennzeichnet, dass** die Fläche (33,34) durch eine Verteilermembran (31, 32) definiert wird, die um das Rohrbündel angeordnet ist.

5. Tauscher nach Anspruch 1, **dadurch gekennzeichnet, dass** der Tauscher ein TLE für Ethylen ist.

6. Tauscher nach Anspruch 1, **dadurch gekennzeichnet, dass** die Rohre mit dazwischen eingefügten Anschlussstücken (36) an die Rohrplatten geschweißt sind.

7. Tauscher nach Anspruch 6, **dadurch gekennzeichnet, dass** die Anschlussstücke (36) und die Rohrplatten aus Inconel 625 gefertigt sind.

8. Verfahren zur Herstellung eines Wärmetauschers nach einem der vorstehenden Ansprüche, welches die Schritte umfasst, bestehend aus Fertigen der Tauscherhülle (11), die im Wesentlichen ein Zylinder ist, der an beiden Enden offen ist und in Nähe zu dem Ende mindestens einen ausgesparten Teil (37) aufweist, Schweißen der ersten Enden der Rohre (18) in das Rohrbündel an die erste Rohrplatte der zwei Rohrplatten mittels IBW, Anordnen der ersten Rohrplatte mit dem derart neben dem entsprechenden Ende der Hülle eingesetzten Rohrbündel, dass die Fläche mit dem ausgesparten Teil (37) mit dem abgewandten Ende der Rohre in dem Bündel ausgerichtet ist, Schweißen der abgewandten Enden der Rohre an die zweite Rohrplatte mittels IBW, und Zugeben des ausgesparten Teils der Hülle, um die Hülle zu vervollständigen.

9. Verfahren nach Anspruch 8, in welchem der Tauscher gefertigt wird, um reversibel zu sein.

## Revendications

1. Echangeur de chaleur (10) avec une coque sous pression (11) et un faisceau de tubes avec des tubes d'échange (18) positionnés entre une première et une seconde plaque tubulaire (16, 17), dans lequel les deux extrémités des tubes (18) dans le faisceau de tubes sont fixées aux plaques tubulaires via IBW, **caractérisé en ce que** la coque sous pression a, au niveau d'une extrémité à proximité de la seconde plaque tubulaire, une partie détachée (37) de la coque afin de fournir l'accès au côté interne de ladite seconde plaque tubulaire pendant l'assemblage, après que les extrémités opposées des tubes ont été fixées à la première plaque tubulaire.

2. Echangeur selon la revendication 1, **caractérisé en ce que** ladite partie détachée (37) de la coque est formée avec des sections de la paroi de coque.

3. Echangeur selon la revendication 1, **caractérisé en ce que** ladite partie détachée (37) de la coque est positionnée en correspondance avec une zone (33, 34) pour la distribution du fluide de refroidissement à l'intérieur de la coque complètement assemblée.

4. Echangeur de chaleur selon la revendication 3, **caractérisé en ce que** ladite zone (33, 34) est définie par un diaphragme de distributeur (31, 32) agencé autour du faisceau de tubes.

5. Echangeur selon la revendication 1, **caractérisé en ce qu'**un tel échangeur est un TLE pour éthylène.

6. Echangeur selon la revendication 1, **caractérisé en ce que** les tubes sont soudés aux plaques tubulaires avec des segments de raccord (36) intercalés entre eux.

7. Echangeur selon la revendication 6, **caractérisé en ce que** les segments de raccord (36) et les plaques tubulaires sont réalisés à partir d'Inconel 625.

8. Procédé pour la production d'un échangeur de chaleur selon l'une quelconque des revendications précédentes, comprenant les étapes consistant à produire la coque d'échangeur (11) qui est essentiellement un cylindre qui est ouvert au niveau des deux extrémités et a au moins une partie (37) manquante à proximité de l'extrémité, souder les premières extrémités du tube (18) dans le faisceau de tubes à la première plaque tubulaire des deux plaques tubulaires via IBW, agencer la première plaque tubulaire à proximité de l'extrémité correspondante de la coque avec le faisceau de tubes inséré de sorte que la zone dans la partie manquante (37) est alignée avec l'extrémité opposée des tubes dans le faisceau, souder les extrémités opposées des tubes à la seconde plaque tubulaire via IBW, et ajouter la partie manquante de la coque afin de terminer ladite coque.

9. Procédé selon la revendication 8, dans lequel l'échangeur est réalisé pour être réversible.
